(19) Europäisches Patentamt / European Patent Office / Office européen des brevets

(11) **EP 4 286 967 B1**

(12) **EUROPEAN PATENT SPECIFICATION**

(45) Date of publication and mention
of the grant of the patent:
**29.10.2025 Bulletin 2025/44**

(21) Application number: **23171993.1**

(22) Date of filing: **08.05.2023**

(51) International Patent Classification (IPC):
***G05B 19/418*** *(2006.01)*

(52) Cooperative Patent Classification (CPC):
**G05B 19/4183**; G05B 2219/45127

(54) **METHOD AND CONTROL DEVICE FOR SETTING AN OPERATING MODE AND/OR ASSOCIATE RESULT VALUES OF A TOOL**

VERFAHREN UND STEUERGERÄT ZUM EINSTELLEN EINES BETRIEBSMODUS UND/ODER ZUORDNEN VON ERGEBNISWERTEN EINES WERKZEUGS

PROCÉDÉ ET DISPOSITIF DE COMMANDE POUR RÉGLER UN MODE DE FONCTIONNEMENT ET/OU DES VALEURS DE RÉSULTAT ASSOCIÉES D'UN OUTIL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.06.2022 SE 2230173**

(43) Date of publication of application:
**06.12.2023 Bulletin 2023/49**

(73) Proprietor: **Atlas Copco Industrial Technique AB
105 23 Stockholm (SE)**

(72) Inventors:
• **Wallgren, Johan
117 32 Stockholm (SE)**
• **Nikolov, Nico
46325 Borken (DE)**

(74) Representative: **Atlas Copco Industrial Technique
AB
105 23 Stockholm (SE)**

(56) References cited:
WO-A1-2020/126234      US-A1- 2015 018 999
US-A1- 2019 056 507      US-A1- 2021 056 682

**Description**

Technincal field

The present disclosure generally relates to the field of positioning of tools relative to objects to be processed in a factory for the purpose of setting an operating mode and/or associate result values of the tool.

Background of the invention

Manufacturing of objects/products in industrial manufacturing is often complex. There are high requirements on the manufacturing steps being performed correctly.

In manufacturing (such as assembling) processes, tools are often used. It is important that the tool is set in the correct operating mode for the object on which the processing steps should be performed. It is also important that the results of the processing steps are associated with the object on which they were actually performed, as the results of the processing of the object later can be subject for review (which also may be referred to as audit). In order to realize that, there are industrial manufacturing systems that position the tool relative to the objects to be processed. In that manner, the control device controlling the tool can estimate which object is about to be processed by the tool and can set the operating mode of the tool and/or associate result values accordingly.

An example of such a system is disclosed in WO 2020/126234 A1, wherein a distance between the tool and the object to be processed is measured based on a time of flight of a radio signal between the tool and a tag placed on or in relation to the object.

However, in some situations, merely measuring the distance between the tool and the tag of the objects may not suffice in order to be able to correctly determine on which object the tool currently is about to operate on. Imagine an assembly line with relatively large objects to be processed, such as cars, wherein the radio tags are placed at the very front of the cars. An operator of the tool currently operating at the very back of one car may then actually be positioned closer to the radio tag on the car behind. Then, if measures aren't taken, there is a risk that the incorrect object is associated with the tool.

US 2021/056682 A1 shows a solution wherein a camera-based technique is used in order to locate a tool on a bolt-level.

US 2019/056507 A1 shows a system wherein the presence of a portable tool within or outside at least one pre-determined space is determined.

Summary of the invention

It would be advantageous to achieve a method and a control device overcoming, or at least alleviating, the above mentioned drawbacks. In particular, it would be desirable to enable a method and a control device that enables more accurate setting of an operating mode and/or associate result values of a tool.

To better address one or more of these concerns, a method and a control device having the features defined in the independent claims are provided. Preferable embodiments are defined in the dependent claims.

Hence, according to a first aspect, a method for setting an operating mode and/or associate result values of a tool operable in an industrial manufacturing system is provided. The industrial manufacturing system comprises a first radio tag positioned on or in relation to a first object to be processed by the tool, the first radio tag comprising a first identifier associated with the first object; and a second radio tag positioned on or in relation to a second object to be processed by the tool, the second radio tag comprising a second identifier associated with the second object.

The method comprises the steps of:

- receiving input indicative of a first distance between the tool and the first radio tag, measured based on a detected first radio signal between the tool and the first radio tag;

- receiving input indicative of a second distance between the tool and the second radio tag, measured based on a detected second radio signal between the tool and the second radio tag;

- receiving input indicative of a detected first direction from which said first radio signal is transmitted;

- receiving input indicative of a detected second direction from which said second radio signal is transmitted;

- selecting one of the first and second identifiers based on the above defined received inputs (that is, the input indicative of the first distance, the input indicative of the second distance, the input indicative of the detected first direction, the input indicative of the detected second direction); and

- setting an operating mode of the tool based on the selected identifier and/or associate result values of the processing steps performed by the tool with the selected identifier.

According to a second aspect, a control device is provided. The control device is configured to perform the method according to the first aspect.

By taking into account also the detected directions of the radio signals between the tool and the radio tags, in addition to the measured distance there between, it is facilitated to select the correct identifier also in special situations where the radio tag situated closest to the tool is not necessarily the radio tag of the object that the tool is currently processing/about to process. Hence, a more accurate setting of the operating mode and/or association of result values of the tool can be achieved. The present aspects also allow a freer placement of the radio tags in relation to the object, as the method of identifier selection is not dependent solely on the distance between the tool and the radio tags.

In the present specification, by the expression "direction" in the context: "the detected direction from which the radio signal is transmitted", it is meant the direction angle wise in space, not the direction in terms of if the radio signal is transmitted from the radio tag to the tool or vice versa.

According to an embodiment, the first and second directions may be determined based on a detected angle of arrival of the first and second radio signals, respectively. For example, an angle of arrival sensor may be provided in the tool or in the radio tags arranged to detect at what angle the received radio signal comes from. This is advantageous in that it is rather accurate as compared to e.g. only measuring signal strength.

According to an embodiment, the first and second distances may be measured based on a detected time of flight and/or time difference of arrival of the first and second radio signals, respectively. For example, a time of flight and/or time difference of arrival sensor may be provided in the tool or in the radio tags arranged to detect the radio signals. This is advantageous in that it is rather accurate as compared to e.g. only measuring signal strength.

According to an embodiment, the first and second directions may be detected by the first and second radio tags, respectively, wherein the inputs indicative thereof are received from the first and second radio tags, respectively. Hence, the direction detection may be performed by the radio tags and data indicative of the detected directions may then be sent from the radio tags to the control device. The radio tags may typically be fixed in relation to the object during the manufacturing process, while the tool is held by an operator and its' orientation threrefor continously changes. Therefore, the direction detection may be made more accurately if performed by the radio tag than by the tool.

According to an embodiment, the first and second distances may be measured by the first and second radio tags, respectively, wherein the inputs indicative thereof are received from the first and second radio tags, respectively. Hence, the measurement of the distance may be performed by the radio tags and data indicative of the measured distances may then be sent from the radio tags to the control device. For the same reason as discussed above, the distance measurement may be made more accurately if performed by the radio tags than by the tool.

Alternatively, the measurement of the distances may be performed by the tool.

According to an embodiment, the method may further comprise, for each one of the first and second radio tags:

- estimating a distance between the tool and a fictive point on or in relation to the object to be processed, the fictive point being located at a known (predetermined) distance from the radio tag,

    wherein the estimation of said distance between the tool and the fictive point is made based on said known distance between the fictive point and the radio tag, said input indicative of the measured distance between the tool and the radio tag, and said input indicative of the detected direction of the transmitted radio signal, and

    wherein the selecting of one of the first and second identifiers is made based on the estimated distances between the tool and each fictive point.

The placement of the fictive points on or in relation to the objects may preferably be predetermined such that, a tool situated by any one of all processing points on a particular object will be closer to the fictive point of that object than to the fictive points of any other objects being processed on the same line. To achieve this, the fictive point may e.g. be positioned at or close to a center point of the object. However, depending on the size, shape of, gap between the objects, locations of the processing points, etc., the position of the fictive point may be predetermined differently.

By using a fictive point as a basis for the selection of identifier, a more free selection of placement of the radio tag on or in relation to the object can be made. For example, the radio tags may be positioned at the very front or back ends of the objects while still enabling an accurate selection of identifier.

The estimation of the distance between the tool and the fictive points can be made in several different ways.

For example, the estimation (of the distance between the tool and the fictive point) may be made based on adding the known distance between the fictive point and the radio tag to the measured distance between the tool and the radio tag if the detected direction is within a first predetermined direction range.

Further, the estimation (of the distance between the tool and the fictive point) may be made based on subtracting the known distance between the fictive point and the radio tag from the measured distance between the tool and the radio tag if the detected direction is within a second predetermined direction range different from the first predetermined direction range.

In this way, a rough estimation of the distance between the tool and the fictive points can be achieved. As an illustrative example, if the radio signal is received from the right hand side of the radio tag, the known distance is subtracted from the measured distance, while if the radio signal is received from the left hand side of the radio tag, the known distance is added to the measured distance. The estimated distance may then not necessarily equal the real distance, but a rough estimation may suffice to achieve a more accurate setting of the operating mode of the tool and/or association of result values. The present example is advantageous in that it is rather simple and may save computing power.

According to another example, the estimation (of the distance between the tool and the fictive point) may be made based on a trigonometric function. This allows for the distance to the fictive point to be more accurately calculated.

For example, the trigonometric function may be:

$$F_n = \sin(\alpha_n) \times \frac{L_n}{D_n}$$

wherein:

$F_n$ is the estimated distance between the fictive point and the tool;
$L_n$ is the known distance between the fictive point and the radio tag;
$D_n$ is the measured distance between the radio tag and the tool; and
$\alpha_n$ is the angle between a fictive straight line between the radio tag and the fictive point and a fictive straight line between the radio tag and the tool,
wherein the angle $\alpha_n$ is determined based on said detected direction, such as based on an angle of arrival of the radio signal.

I will be appreciated that, alternatively (or additionally), any other suitable trigonometric function may be used.

According to an embodiment, the first and second objects may be vehicles and the identifier may be a Vehicle Identification Number (VIN). Vehicle manufacturing lines are characterized by relatively large objects (that is, the vehicles) compared to the gaps between objects on the manufacturing line. The present method and control device may therefore be particularly advantageous in vehicle manufacturing industries as it allows for a freer placement of the radio tags on large objects to be processed with maintained accuracy in the setting of the operating mode of the tool and/or association of the result values.

According to an embodiment, the tool may be a tightening tool, such as a screw driver, torque wrench or nut runner. Alternatively, the tool may be some other kind of tool, such as a grinder, drill or riveting tool.

According to an embodiment, the result values of the tightening tool may be the resulting torque and/or angle.

According to an embodiment, the operating mode of the tightening tool may be a tightening parameter value, such as torque and/or angle (that should be achieved in the tightening), or an enable/disable mode.

According to an embodiment, the method may comprise receiving inputs indicative of measured distances between the tool and several radio tags (each arranged on/in relation to an object to be processed) further to the first and second radio tags. This may be referred to as a scanning mode and is preferably performed as a first step. The method may then comprise selecting the two radio tags having the shortest measured distances to the tool and then proceed with the above defined steps of receiving inputs indicative of the detected directions and selection of identifier only for these two selected radio tags (which thereafter may be referred to as the first and second radio tags). This may be referred to as an identifier selection mode.

Hence, all steps of the method may not be performed for each and every one of the radio tags within radio signal reach from the tool, but only for the two closest. Taking only the distance between the tool and the radio tags into account may suffice to correctly select the two closest radio tags. Then the more accurate estimation (by detecting the radio signal directions), which requires more computing power, can be made only for the two closest radio tags.

According to an embodiment, the radio tags may be Ultra-Wideband Radio (UWB) tags and the radio signals may be Ultra-Wideband Radio (UWB) signals. Other techniques may be also be envisaged, such as a Bluetooth radio based technique etc.

According to another aspect, a computer program is provided comprising instructions which, when the program is executed by a computer, cause the computer to carry out the method according to the first aspect.

According to another aspect, a computer-readable medium comprising instructions which, when executed by a computer, cause the computer to carry out the method according to the first aspect.

According to an embodiment, an industrial manufacturing system is provided comprising:

at least one tool for processing a first object and a second object;
a first radio tag arranged to be positioned on or in relation to the first object to be processed, the first radio tag comprising a first identifier associated with the first object;
a second radio tag arranged to be positioned on or in relation to the second object to be processed, the second radio tag comprising a second identifier associated with the second object; and
a control device as defined in accordance with the second aspect.

It is noted that embodiments of the invention relates to all possible combinations of features recited in the claims. Further, it will be appreciated that the various embodiments described for the method are all combinable with the control device as defined in accordance with the second aspect of the present invention.

Brief description of the drawings

These and other aspects will now be described in more detail in the following illustrative and non-limiting detailed description of embodiments, with reference to the appended drawings.

Figure 1 shows an industrial manufacturing system according to an embodiment.

Figure 2 shows a method according to an embodiment.

All the figures are schematic, not necessarily to scale, and generally only show parts which are necessary in order to elucidate the embodiments, wherein other parts may be omitted. Like reference numerals refer to like elements throughout the description.

Detailed description of embodiments

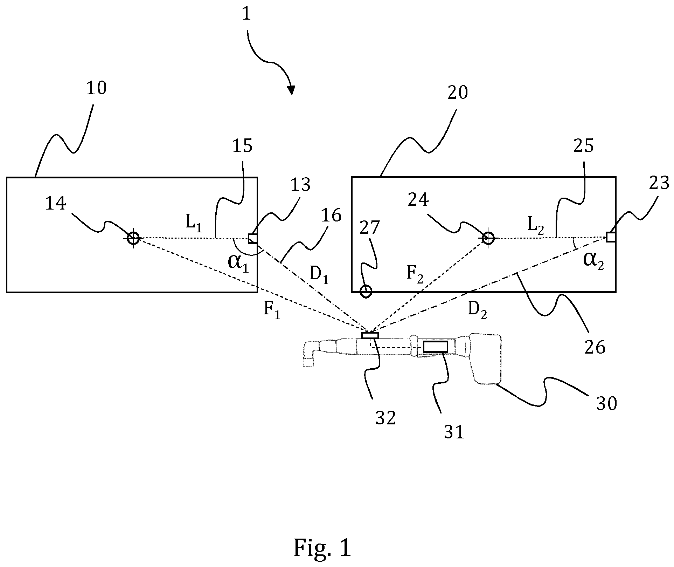

An industrial manufacturing system 1 according to an embodiment will be described with reference to Figure 1.

The industrial manufacturing system 1 comprises a tool 30 for processing a first object 10 and a second object 20 on a manufacturing line. The objects 10, 20 may e.g. be vehicles. The tool 30 may e.g. be a tightening tool 30. The tool 30 may e.g. currently be about to process a processing point 27 at the back end of the second object 20. The industrial manufacturing system 1 further comprises a first radio tag 13 arranged on the first object 10, and a second radio tag 23 arranged on the second object 20. In case the objects 10, 20 are arranged on carts for being conveyed on the manufacturing line, the radio tags 13, 23 can be placed on the carts instead of directly on the objects 10, 20. In the present example, the radio tags 13, 23 are positioned at the very front end of each object 10, 20. There may be several more objects provided with radio tags on the manufacturing line.

The tool 30 may comprise a radio module 32 arranged to send and receive radio signals to/from each one of the radio tags 13, 23.

Each radio tag 13, 23 may comprise a sensor adapted to detect a radio signal sent from the tool 30 and measure the distance between the tool 30 and the radio tag 13, 23 based on the detected radio signal. For example, the sensor may be a time of flight or time difference of arrival sensor configured to measure the time of flight or time difference of arrival of the radio signal from the tool 30.

Each radio tag 13, 23 may further comprise a sensor adpated to detect from wich direction the radio signal from the tool 30 is received. For example, the sensor may be arranged to detect an angle of incidence of an incomming radio signal. This may be realized in different ways, e.g. by having at least two sensor elements oriented and/or positioned differently compared with each other, wherein the time or phase difference of the reception of the radio signal and/or a difference in signal strength of the received radio signal at the two sensor elements may be utlilized in order to determine from which direction the radio signal from the tool 30 is transmitted. For example, some type of angle of arrival sensor may be used.

The industrial manufacturing system 1 further comprises a control device 31 for setting an operating mode and/or associate result values of the tool 30. In the present example, the control device 31 is arranged in the tool 30, however, it may alternatively be arranged as a separate device, such as in a centralized control unit controlling several tools in the factory. The control device 31 may be in communication with the radio module 32 of the tool 30 to receive data therefrom. The control device 31 may comprise a memory for storing a data program and data, and a processor for executing the data program.

It will be appreciated that the control device 31 may be comprised in one single unit, or be distributed in several units of the system 1.

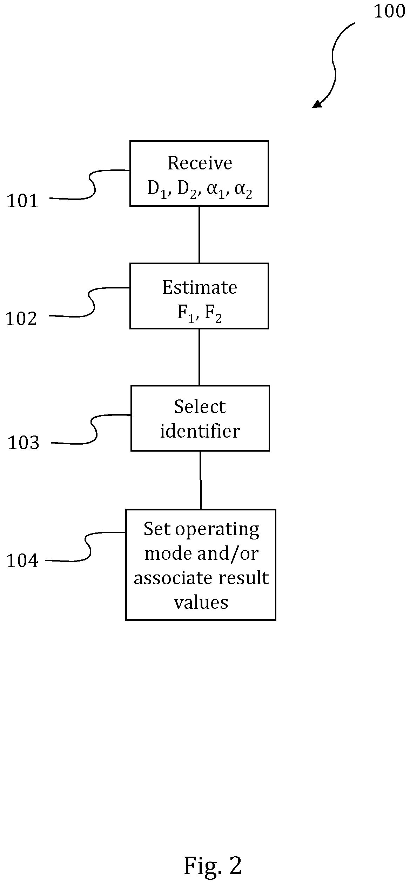

In the following, an example of operation of the industrial manufacturing system 1 will be described with reference to both Figure 1 and 2.

First, as an optional step, the tool 30 may be in a scanning mode, wherein the tool 30 transmits a radio signal (via the radio module 32) to all radio tags 13, 23 in the factory within radio signal reach. All those radio tags 13, 23, may then measure the distance $D_1$, $D_2$ to the tool 30 based on the received radio signal (e.g. by means of their time of flight/time difference of arrival sensors) and respond by sending data indicative of the measured distance $D_1$, $D_2$. The control device 30 may then select the two radio tags 13, 23 being closest to the tool 30 and may then switch to an identifier selection mode.

The (selected two) radio tags 13, 23, may then detect from which direction the radio signal from the tool 30 is sent. According to a first example, the first radio tag 13 may simply detect that the radio signal from the tool 30 comes from the left hand side as seen from the first radio tag 13 (i.e. from a first direction range), and the second radio tag 23 may detect that the radio signal comes from the right hand side as seen from the second radio tag 23 (i.e. from a second direction range different from the first). According to a second example, the directions may be detected more accurately by detecting a more specific angle of incidence $\alpha_1$, $\alpha_2$ of the radio signals.

The radio tags 13, 23 then sends data indicative of these detected directions to the control device 31 (via the radio module 32 of the tool 30).

The control device 31 has now received 101 input indicative of the detected directions $\alpha_1$, $\alpha_2$ and the measured distances $D_1$, $D_2$.

The control device 31 may further receive, from the first radio tag 13, data indicative of a predetermined (i.e. known) first distance $L_1$, between a first fictive point 14 of the first object 10; and, from the second radio tag 23, data indicative of a predetermined (i.e. known) second distance $L_2$ between a second fictive point 24 of the second object 20. Alternatively, data indicative of the first and second distances $L_1$, $L_2$ may be stored (pre-set) somewhere else, such as in the control device 31 itself.

The known distances $L_1$, $L_2$ may be the same for all objects 10, 20, or unique for each object 10, 20.

According to an embodiment, the control device 31 may then estimate 102 a distance $F_1$, $F_2$ from the tool 30 to each fictive point 14, 24. This may be made in different ways.

According to a first example, a rough estimation of the distance $F_1$ can be made by subtracting the known distance $L_1$ from the measured distance $D_1$ in case the detected direction is within a predetermined direction range, such as if the radio signal comes from the left hand side as seen from the first radio tag 13. The sum of the subtraction the roughly corresponds to the distance $F_1$ between the first fictive point 14 and the tool 30. Further, in case the detected direction is within another predetermined direction range, such as if the radio signal comes from the right hand side as seen from the second radio tag 23, the known distance $L_2$ is added to the measured distance $D_2$. The sum of the addition then roughly corresponds to the distance $F_2$ between the second fictive point 24 and the tool 30.

According to a second example, a more accurate estimation of the distances $F_1$, $F_2$ to each fictive point 14, 24 can be made by using a trigonometric formula, such as:

$$F_n = \sin(\alpha_n) \times \frac{L_n}{D_n}$$

wherein:

$F_n$ is the estimated distance between the fictive point 14, 24 and the tool 30;
$L_n$ is the known distance between the fictive point 14, 24 and the radio tag 13, 23;
$D_n$ is the measured distance between the radio tag 13, 23 and the tool 30; and
$\alpha_n$ is the angle between a fictive straight line between the radio tag and the fictive point and a fictive straight line between the radio tag and the tool.

The angle $\alpha_n$ is determined based on the detected direction, such as based on a detected angle of incidence $\alpha_1$, $\alpha_2$ of the radio signal.

The control device 31 may then select 103 one of the first and second identifiers based on the received inputs ($D_1$, $D_2$, $\alpha_1$, $\alpha_2$). For example, the identifier associated with the object having the smallest distance $F_1$, $F_2$ between the tool 30 and its' fictive point 14, 24 may be selected 103. In the example illustrated in Figure 1, that is the identifier of the second object 20.

As can be seen in Figure 1, the tool 30 is actually closer to the radio tag 13 of the first object 10 even though processing a point 27 at the back end of the second object 20. However, thanks to the inventive method, the correct identifier, namely that of the second object 20, can be selected.

The control device 31 may then set 104 an operating mode of the tool 30 based on the selected identifier. This may e.g. include selecting a particular tightening program and/or set tightening parameters, such as target torque and/or angle. The control unit 31 may further (as an alternative or in addition) associate result values of the processing steps (such as tightenings) performed by the tool with the selected identifier. For example, the resulting torque and/or angle parameters/curves of the tightening may be saved in association with the selected identifier.

The person skilled in the art realizes that the present invention by no means is limited to the embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. Method (100) for setting an operating mode and/or associate result values of a tool (30) operable in an industrial manufacturing system (1) comprising:

    a first radio tag (13) positioned on or in relation to a first object (10) to be processed by the tool, the first radio tag comprising a first identifier associated with the first object; and
    a second radio tag (23) positioned on or in relation to a second object (20) to be processed by the tool, the second radio tag comprising a second identifier associated with the second object, the method comprising the steps of:

    - receiving (101) input indicative of a first distance ($D_1$) between the tool and the first radio tag, measured based on a detected first radio signal between the tool and the first radio tag;
    - receiving (101) input indicative of a second distance ($D_2$) between the tool and the second radio tag, measured based on a detected second radio signal between the tool and the second radio tag;
- receiving (101) input indicative of a detected first direction from which said first radio signal is transmitted;
- receiving (101) input indicative of a detected second direction from which said second radio signal is transmitted;
- selecting (103) one of the first and second identifiers based on the above defined received inputs; and
- setting (104) an operating mode of the tool based on the selected identifier and/or associate result values of the processing steps performed by the tool with the selected identifier.

2. The method as defined in claim 1, wherein the first and second directions are determined based on a detected angle ($\alpha_1$, $\alpha_2$) of arrival of the first and second radio signals, respectively.

3. The method as defined in claim 1 or 2, wherein the first and second distances are measured based on a detected time of flight and/or time difference of arrival of the first and second radio signals, respectively.

4. The method as defined in any one of the preceding claims, wherein the first and second directions are detected by the first and second radio tags, respectively, wherein the inputs indicative thereof are received from the first and second radio tags, respectively.

5. The method as defined in any one of the preceding claims, wherein the first and second distances are measured by the first and second radio tags, respectively, wherein the inputs indicative thereof are received from the first and second radio tags, respectively.

6. The method as defined in any one of the preceding claims, further comprising, for each one of the first and second radio tags:

- estimating a distance ($F_1$, $F_2$) between the tool and a fictive point (14, 24) on or in relation to the object to be processed, the fictive point being located at a known distance ($L_1$, $L_2$) from the radio tag;
wherein the estimation of said distance ($F_1$, $F_2$) between the tool and the fictive point is made based on said known distance ($L_1$, $L_2$) between the fictive point and the radio tag, said input indicative of the measured distance ($D_1$, $D_2$) between the tool and the radio tag, and said input indicative of the detected direction of the transmitted radio signal; and
wherein the selecting of one of the first and second identifiers is made based on the estimated distances ($F_1$, $F_2$) between the tool and each fictive point.

7. The method as defined in claim 6, wherein the estimation is made based on adding said known distance ($L_1$, $L_2$) to said measured distance ($D_1$, $D_2$) between the tool and the radio tag if said detected direction is within a first predetermined direction range, and
wherein the estimation is made based on subtracting said known distance ($L_1$, $L_2$) from said measured distance ($D_1$, $D_2$) between the tool and the radio tag if said detected direction is within a second predetermined direction range different from the first predetermined direction range.

8. The method as defined in claim 7, wherein the estimation is made based on a trigonometric function.

9. The method as defined in claim 7, wherein in the trigonometric function is:

$$F_n = \sin(\alpha_n) \times \frac{L_n}{D_n}$$

wherein:

$F_n$ is the estimated distance between the fictive point and the tool;
$L_n$ is the known distance between the fictive point and the radio tag;
$D_n$ is the measured distance between the radio tag and the tool; and
$\alpha_n$ is the angle between a fictive straight line (15, 25) between the radio tag and the fictive point and a fictive straight line (16, 26) between the radio tag and the tool,
wherein the angle $\alpha_n$ is determined based on said detected direction, such as based on an angle of arrival of the radio signal.

10. The method as defined in any one of the preceding claims, further comprising:

- receiving inputs indicative of measured distances between the tool and several radio tags, each arranged on/in relation to an object to be processed, further to the first and second radio tags;
- selecting the two radio tags having the shortest measured distances to the tool;

and then proceed with the above defined steps of receiving inputs indicative of the detected directions and selection of identifier only for the these two selected radio tags.

**11.** The method as defined in any one of the preceding claims, wherein the radio tags are Ultra-Wideband Radio (UWB) tags and the radio signals are Ultra-Wideband Radio (UWB) signals.

**12.** A computer program comprising instructions which, when the program is executed by a computer, cause the computer to carry out the method of any one of the preceding claims.

**13.** A computer-readable medium comprising instructions which, when executed by a computer, cause the computer to carry out the method of any one of claims 1 to 11.

**14.** Control device (31) for setting an operating mode and/or associate result values of a tool (30) operable in an industrial manufacturing system (1) comprising:

a first radio tag (13) positioned on or in relation to a first object (10) to be processed by the tool, the first radio tag comprising a first identifier associated with the first object; and
a second radio tag (23) positioned on or in relation to a second object (20) to be processed by the tool, the second radio tag comprising a second identifier associated with the second object, the control device being configured to perform the method as defined in any one of the preceding claims.

**15.** An industrial manufacturing system (1) comprising:

at least one tool (30) for processing a first object (10) and a second object (20);
a first radio tag (13) arranged to be positioned on or in relation to the first object to be processed, the first radio tag comprising a first identifier associated with the first object;
a second radio tag (23) arranged to be positioned on or in relation to the second object to be processed, the second radio tag comprising a second identifier associated with the second object; and
a control device (31) as defined in claim 14.

**Patentansprüche**

**1.** Verfahren (100) zum Einstellen eines Betriebsmodus und/oder Verknüpfen von Ergebniswerten eines Werkzeugs (30), das in einem industriellen Fertigungssystem (1) betreibbar ist, umfassend:

ein erstes Funk-Tag (13), das auf oder in Bezug auf ein erstes Objekt (10) positioniert ist, das durch das Werkzeug verarbeitet werden soll, das erste Funk-Tag umfassend eine erste Kennung, die mit dem ersten Objekt verknüpft ist; und
ein zweites Funk-Tag (23), das auf oder in Bezug auf ein zweites Objekt (20) positioniert ist, das durch das Werkzeug verarbeitet werden soll, das zweite Funk-Tag umfassend eine zweite Kennung, die mit dem zweiten Objekt verknüpft ist,
das Verfahren umfassend die Schritte:

- Empfangen (101) einer Eingabe, die eine erste Entfernung ($D_1$) zwischen dem Werkzeug und dem ersten Funk-Tag anzeigt, die basierend auf einem erfassten ersten Funksignal zwischen dem Werkzeug und dem ersten Funk-Tag gemessen wird;
- Empfangen (101) einer Eingabe, die eine zweite Entfernung ($D_2$) zwischen dem Werkzeug und dem zweiten Funk-Tag anzeigt, die basierend auf einem erfassten zweiten Funksignal zwischen dem Werkzeug und dem zweiten Funk-Tag gemessen wird;
- Empfangen (101) einer Eingabe, die eine erfasste erste Richtung anzeigt, aus der das erste Funksignal gesendet wird;
- Empfangen (101) einer Eingabe, die eine erfasste zweite Richtung anzeigt, aus der das zweite Funksignal gesendet wird;
- Auswählen (103) einer der ersten und der zweiten Kennung basierend auf den oben definierten empfangenen Eingaben; und
- Einstellen (104) eines Betriebsmodus des Werkzeugs basierend auf der ausgewählten Kennung und/oder Verknüpfen von Ergebniswerten der Verarbeitungsschritte, die durch das Werkzeug durchgeführt werden, mit der ausgewählten Kennung.

**2.** Verfahren nach Anspruch 1, wobei die erste und die zweite Richtung basierend auf einem erfassten Winkel ($\alpha_1$, $\alpha_2$) eines Einfalls des ersten beziehungsweise zweiten Funksignals bestimmt werden.

**3.** Verfahren nach Anspruch 1 oder 2, wobei die erste und die zweite Entfernung basierend auf einer erfassten Laufzeit und/oder Einfallszeitdifferenz des ersten beziehungsweise des zweiten Funksignals gemessen werden.

**4.** Verfahren nach einem der vorstehenden Ansprüche, wobei die erste und die zweite Richtung durch das erste beziehungsweise das zweite Funk-Tag erfasst werden, wobei die Eingaben, die diese anzeigen, von dem ersten beziehungsweise dem zweiten Funk-Tag empfangen werden.

**5.** Verfahren nach einem der vorstehenden Ansprüche, wobei die erste und die zweite Entfernung durch das erste beziehungsweise das zweite Funk-Tag gemessen werden, wobei die Eingaben, die diese anzeigen, von dem ersten beziehungsweise dem zweiten Funk-Tag empfangen werden.

**6.** Verfahren nach einem der vorstehenden Ansprüche, ferner umfassend, für jedes des ersten und des zweiten Funk-Tags:

- Schätzen einer Entfernung ($F_1$, $F_2$) zwischen dem Werkzeug und einem fiktiven Punkt (14, 24) auf oder in Bezug auf das zu verarbeitende Objekt, wobei sich der fiktive Punkt in einer bekannten Entfernung ($L_1$, $L_2$) von dem Funk-Tag befindet;

wobei die Schätzung der Entfernung ($F_1$, $F_2$) zwischen dem Werkzeug und dem fiktiven Punkt basierend auf der bekannten Entfernung ($L_1$, $L_2$) zwischen dem fiktiven Punkt und dem Funk-Tag erfolgt, wobei die Eingabe die gemessene Entfernung ($D_1$, $D_2$) zwischen dem Werkzeug und dem Funk-Tag anzeigt und die Eingabe die erfasste Richtung des gesendeten Funksignals anzeigt; und

wobei das Auswählen einer der ersten und der zweiten Kennung basierend auf den geschätzten Entfernungen ($F_1$, $F_2$) zwischen dem Werkzeug und jedem fiktiven Punkt erfolgt.

**7.** Verfahren nach Anspruch 6, wobei die Schätzung basierend auf einem Addieren der bekannten Entfernung ($L_1$, $L_2$) zu der gemessenen Entfernung ($D_1$, $D_2$) zwischen dem Werkzeug und dem Funk-Tag erfolgt, falls die erfasste Richtung innerhalb eines ersten zuvor bestimmten Richtungsbereichs liegt, und

wobei die Schätzung basierend auf einem Subtrahieren der bekannten Entfernung ($L_1$, $L_2$) von der gemessenen Entfernung ($D_1$, $D_2$) zwischen dem Werkzeug und dem Funk-Tag erfolgt, falls die erfasste Richtung innerhalb eines zweiten zuvor bestimmten Richtungsbereichs liegt, der von dem ersten vorbestimmten Richtungsbereich differiert.

**8.** Verfahren nach Anspruch 7, wobei die Schätzung basierend auf einer trigonometrischen Funktion erfolgt.

**9.** Verfahren nach Anspruch 7, wobei die trigonometrische Funktion lautet:

$$F_n = \sin(\alpha_n) \times \frac{L_n}{D_n}$$

wobei:

$F_n$ die geschätzte Entfernung zwischen dem fiktiven Punkt und dem Werkzeug ist;
$L_n$ die bekannte Entfernung zwischen dem fiktiven Punkt und dem Funk-Tag ist;
$D_n$ die gemessene Entfernung zwischen dem Funk-Tag und dem Werkzeug ist; und
$\alpha_n$ der Winkel zwischen einer fiktiven Geraden (15, 25) zwischen dem Funk-Tag und dem fiktiven Punkt und einer fiktiven Geraden (16, 26) zwischen dem Funk-Tag und dem Werkzeug ist, wobei der Winkel $\alpha_n$ basierend auf der erfassten Richtung bestimmt wird, beispielsweise basierend auf einem Einfallswinkel des Funksignals.

**10.** Verfahren nach einem der vorstehenden Ansprüche, ferner umfassend:

- Empfangen von Eingaben, die gemessene Abstände zwischen dem Werkzeug und mehreren Funk-Tags anzeigen, die jeweils auf/in Bezug auf ein Objekt angeordnet sind, das verarbeitet werden soll, zusätzlich zu dem ersten und dem zweiten Funk-Tag;
- Auswählen der zwei Funk-Tags, die die kürzeste gemessene Entfernung zu dem Werkzeug aufweisen;

und dann Fortfahren mit den oben definierten Schritten zum Empfangen von Eingaben, die die erfassten Richtungen anzeigen, und Auswählen der Kennung nur für diese zwei ausgewählten Funk-Tags.

**11.** Verfahren nach einem der vorstehenden Ansprüche, wobei die Funk-Tags Ultrabreitbandfunk-Tags (UWB-Tags) sind und die Funksignale Ultrabreitbandfunksignale (UWB-Signale) sind.

**12.** Computerprogramm, umfassend Anweisungen, die, wenn das Programm durch einen Computer ausgeführt wird, den Computer veranlassen, das Verfahren nach einem der vorstehenden Ansprüche umzusetzen.

**13.** Computerlesbares Medium, umfassend Anweisungen, die, wenn sie durch einen Computer ausgeführt werden, den Computer veranlassen, das Verfahren nach einem der Ansprüche 1 bis 11 umzusetzen.

**14.** Steuervorrichtung (31) zum Einstellen eines Betriebsmodus und/oder Verknüpfen von Ergebniswerten eines Werkzeugs (30), das in einem industriellen Fertigungssystem (1) betreibbar ist, umfassend:

ein erstes Funk-Tag (13), das auf oder in Bezug auf ein erstes Objekt (10) positioniert ist, das durch das Werkzeug verarbeitet werden soll, das erste Funk-Tag umfassend eine erste Kennung, die mit dem ersten Objekt verknüpft ist; und

ein zweites Funk-Tag (23), das auf oder in Bezug auf ein zweites Objekt (20) positioniert ist, das durch das Werkzeug verarbeitet werden soll, das zweite Funk-Tag umfassend eine zweite Kennung, die mit dem zweiten Objekt verknüpft ist,

wobei die Steuervorrichtung konfiguriert ist, um das Verfahren nach einem der vorstehenden Ansprüche durchzuführen.

15. Industrielles Fertigungssystem (1), umfassend:

mindestens ein Werkzeug (30) zum Verarbeiten eines ersten Objekts (10) und eines zweiten Objekts (20);

ein erstes Funk-Tag (13), das angeordnet ist, um auf oder in Bezug auf das erste Objekt positioniert zu sein, das verarbeitet werden soll, das erste Funk-Tag umfassend eine erste Kennung, die mit dem ersten Objekt verknüpft ist;

ein zweites Funk-Tag (23), das angeordnet ist, um auf oder in Bezug auf das zweite Objekt positioniert zu sein, das verarbeitet werden soll, das zweite Funk-Tag umfassend eine zweite Kennung, die mit dem zweiten Objekt verknüpft ist; und

eine Steuervorrichtung (31) nach Anspruch 14.

**Revendications**

1. Procédé (100) de réglage d'un mode de fonctionnement et/ou de valeurs de résultat associées d'un outil (30) utilisable dans un système de fabrication industrielle (1) comprenant :

une première étiquette radio (13) positionnée sur ou en relation avec un premier objet (10) à traiter par l'outil, la première étiquette radio comprenant un premier identifiant associé au premier objet ; et

une seconde étiquette radio (23) positionnée sur ou en relation avec un second objet (20) à traiter par l'outil, la seconde étiquette radio comprenant un second identifiant associé au second objet,

le procédé comprenant les étapes consistant à :

- recevoir (101) une entrée indiquant une première distance ($D_1$) entre l'outil et la première étiquette radio, mesurée sur la base d'un premier signal radio détecté entre l'outil et la première étiquette radio ;

- recevoir (101) une entrée indiquant une seconde distance ($D_2$) entre l'outil et la seconde étiquette radio, mesurée sur la base d'un second signal radio détecté entre l'outil et la seconde étiquette radio ;

- recevoir (101) une entrée indiquant une première direction détectée à partir de laquelle ledit premier signal radio est émis ;

- recevoir (101) une entrée indiquant une seconde direction détectée à partir de laquelle ledit second signal radio est émis ;

- sélectionner (103) l'un parmi les premier et second identifiants sur la base des entrées reçues définies ci-dessus ; et

- régler (104) un mode de fonctionnement de l'outil sur la base de l'identifiant sélectionné et/ou des valeurs de résultat associées des étapes de traitement effectuées par l'outil avec l'identifiant sélectionné.

2. Procédé tel que défini dans la revendication 1, dans lequel les première et seconde directions sont déterminées sur la base d'un angle détecté ($\alpha_1$, $\alpha_2$) d'arrivée des premier et second signaux radio, respectivement.

3. Procédé tel que défini dans la revendication 1 ou 2, dans lequel les première et seconde distances sont mesurées sur la base d'un temps de vol détecté et/ou d'une différence de temps d'arrivée des premier et second signaux radio, respectivement.

4. Procédé tel que défini dans l'une quelconque des revendications précédentes, dans lequel les première et seconde directions sont détectées par les première et seconde étiquettes radio, respectivement, dans lequel les entrées indiquant celles-ci sont reçues en provenance des première et seconde étiquettes radio, respectivement.

5. Procédé tel que défini dans l'une quelconque des revendications précédentes, dans lequel les première et seconde distances sont mesurées par les première et seconde étiquettes radio, respectivement, dans lequel les entrées indiquant celles-ci sont reçues en provenance des première et seconde étiquettes radio, respectivement.

6. Procédé tel que défini dans l'une quelconque des revendications précédentes, comprenant en outre, pour chacune des première et seconde étiquettes radio :

- l'estimation d'une distance ($F_1$, $F_2$) entre l'outil et un point fictif (14, 24) sur ou en relation avec l'objet à traiter, le point fictif étant situé à une distance connue ($L_1$, $L_2$) de l'étiquette radio ;

dans lequel l'estimation de ladite distance ($F_1$, $F_2$) entre l'outil et le point fictif est réalisée sur la base de ladite distance connue ($L_1$, $L_2$) entre le point fictif et l'étiquette radio, de ladite entrée indiquant la distance mesurée ($D_1$, $D_2$) entre l'outil et l'étiquette radio, et de ladite entrée indiquant la direction détectée du signal radio transmis ; et dans lequel la sélection de l'un parmi les premier et second identifiants se fait sur la base des distances estimées ($F_1$, $F_2$) entre l'outil et chaque point fictif.

7. Procédé tel que défini dans la revendication 6, dans lequel l'estimation est faite sur la base de l'addition de ladite distance connue ($L_1$, $L_2$) à ladite distance mesurée ($D_1$, $D_2$) entre l'outil et l'étiquette radio si ladite direction détectée se trouve dans une première plage de direction prédéterminée, et dans lequel l'estimation est faite sur la base de la soustraction de ladite distance connue ($L_1$, $L_2$) de ladite distance mesurée ($D_1$, $D_2$) entre l'outil et l'étiquette radio si la direction détectée se trouve dans une seconde plage de direction prédéterminée différente de la première plage de direction prédéterminée.

8. Procédé tel que défini dans la revendication 7, dans lequel l'estimation est faite sur la base d'une fonction trigonométrique.

9. Procédé tel que défini dans la revendication 7, dans lequel la fonction trigonométrique est :

$$F_n = \sin(\alpha_n) \times \frac{L_n}{D_n}$$

où :

$F_n$ est la distance estimée entre le point fictif et l'outil ;
$L_n$ est la distance connue entre le point fictif et l'étiquette radio ;
$D_n$ est la distance mesurée entre l'étiquette radio et l'outil ; et
$\alpha_n$ est l'angle entre une ligne droite fictive (15, 25) entre l'étiquette radio et le point fictif et une ligne droite fictive (16, 26) entre l'étiquette radio et l'outil,
dans lequel l'angle $\alpha_n$ est déterminé sur la base de ladite direction détectée, par exemple sur la base d'un angle d'arrivée du signal radio.

10. Procédé tel que défini dans l'une quelconque des revendications précédentes, comprenant en outre :

- la réception d'entrées indiquant des distances mesurées entre l'outil et plusieurs étiquettes radio, chacune placée sur/en relation avec un objet à traiter, en plus des première et seconde étiquettes radio ;
- la sélection des deux étiquettes radio ayant les distances mesurées les plus courtes par rapport à l'outil ;

et procédant ensuite aux étapes définies ci-dessus de réception d'entrées indiquant les directions détectées et de sélection d'identifiant uniquement pour ces deux étiquettes radio sélectionnées.

11. Procédé tel que défini dans l'une quelconque des revendications précédentes, dans lequel les étiquettes radio sont des étiquettes radio à bande ultra-large (UWB) et les signaux radio sont des signaux radio à bande ultra-large (UWB).

12. Programme informatique comprenant des instructions qui, lorsque le programme est exécuté par un ordinateur, amènent l'ordinateur à réaliser le procédé selon l'une quelconque des revendications précédentes.

13. Support de stockage lisible par ordinateur comprenant des instructions qui, lorsqu'elles sont exécutées par un ordinateur, amènent l'ordinateur à réaliser le procédé selon l'une quelconque des revendications 1 à 11.

14. Dispositif de commande (31) pour le réglage d'un mode de fonctionnement et/ou de valeurs de résultat associées d'un outil (30) utilisable dans un système de fabrication industrielle (1) comprenant :

une première étiquette radio (13) positionnée sur ou en relation avec un premier objet (10) à traiter par l'outil, la première étiquette radio comprenant un premier identifiant associé au premier objet ; et
une seconde étiquette radio (23) positionnée sur ou en relation avec un second objet (20) à traiter par l'outil, la seconde étiquette radio comprenant un second identifiant associé au second objet,
le dispositif de commande étant configuré pour effectuer le procédé tel que défini dans l'une quelconque des revendications précédentes.

15. Système de fabrication industrielle (1) comprenant :

au moins un outil (30) pour traiter un premier objet (10) et un second objet (20) ;

une première étiquette radio (13) conçue pour être positionnée sur ou en relation avec le premier objet à traiter, la première étiquette radio comprenant un premier identifiant associé au premier objet ;

une seconde étiquette radio (23) conçue pour être positionnée sur ou en relation avec le second objet à traiter, la seconde étiquette radio comprenant un second identifiant associé au second objet ; et

un dispositif de commande (31) tel que défini dans la revendication 14.

Fig. 1

100

Receive
$D_1$, $D_2$, $\alpha_1$, $\alpha_2$

101

Estimate
$F_1$, $F_2$

102

Select
identifier

103

Set operating
mode and/or
associate result
values

104

Fig. 2

**EP 4 286 967 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020126234 A1
- US 2021056682 A1
- US 2019056507 A1